# EUROPEAN PATENT SPECIFICATION

(11) **EP 4 300 933 B1**
(45) Date of publication and mention of the grant of the patent: **19.11.2025**
(21) Application number: 22759297.9
(22) Date of filing: 01.02.2022
(51) Int. Cl.: H04N 1/00, G06F 3/12, H04N 1/44

(54) **INFORMATION PROCESSING DEVICE AND PROGRAM**
INFORMATIONSVERARBEITUNGSVORRICHTUNG UND -PROGRAMM
DISPOSITIF ET PROGRAMME DE TRAITEMENT D'INFORMATIONS

(30) Priority: 24.02.2021 JP 2021027639
(43) Date of publication of application: 03.01.2024
(73) Proprietor: FUJIFILM Corporation, Tokyo 106-8620 (JP)
(72) Inventor: SUGIBAYASHI, Yutaro, Yokohama-shi, Kanagawa 220-0012 (JP)
(74) Representative: Meissner Bolte Partnerschaft mbB
(86) International application number: PCT/JP2022/003813
(87) International publication number: WO 2022/181256

(56) References cited:
- JP-A- 2006 344 126
- JP-A- 2013 242 688
- JP-A- 2016 045 623
- JP-A- 2018 125 728
- JP-B2- 4 873 184
- US-A1- 2015 373 216

## Description

### Technical Field

The technology of the present disclosure relates to an information processing device and a program.

### Background Art

Japanese Patent Application Laid-Open (JP-A) No. 2018-125687 discloses an image processing device that prevents deletion of a history of jobs selected by a user from a storage unit even when there is an upper limit to the number of jobs that can be stored in the storage unit and a stored job is deleted when the number of jobs exceeds the upper limit.

Japanese Patent Application Laid-Open (JP-A) No. 2020 043389 discloses an information processing device that, when a one-touch application is associated with an icon, recommends a generator of the one-touch application to set, as the icon of the one-touch application, either "individual" that grants a use right only to a specific user or "public" that grants a use right to all users.

Japanese Patent Application Laid-Open (JP-A) No. 2020 042555 discloses a control device that performs control such that an authority set in a selection button is changed from one of sharing and individual to the other according to a use situation of the selection button when any one of a sharing authority that enables all users to make use and an individual authority that enables a specific user to make use is set and control is performed to display a plurality of selection buttons associated with an application to be executed is displayed on a display unit. JP 4 873184 B2 discloses a multifunction machine configured that when an authenticated user performs a setup operation for elements of a new job which was not used in the past, setup contents of a job including the same elements as the elements are displayed on an operation display unit on condition that the job is present among jobs of other users. The multifunction machine allows a user to refer to displayed setup contents of the job of other users.

### SUMMARY OF INVENTION

### Technical Problem

An object of the present disclosure is to provide an information processing device and a program capable of preventing generation of process execution information of a sharing setting including destination information of an individual attribute or storage destination information of an individual attribute in a case in which process execution information of an individual setting available only to a specific user is changed to process execution information of a sharing setting available to a plurality of users.

### Solution to Problem

The present invention is defined in independent claims 1 and 4 as appended. Further preferable embodiments are given in the dependent claims.

### Advantageous Effects of Invention

According to the image forming device as defined in claim 1, in a case in which the process execution information of the individual setting available only to a specific user is changed to the process execution information of the sharing setting available to a plurality of users, it is possible to prevent generation of the process execution information of the sharing setting including the destination information of the individual attribute or the storage destination information of the individual attribute.

Furthermore, it is possible to prevent generation of the process execution information of the sharing setting in a state in which the destination information of the individual attribute or the storage destination information of the individual attribute is erroneously included.

According to the image forming device as defined in claim 2, in a case in which the user intends that the destination information of the individual attribute or the storage destination information of the individual attribute is included in the process execution state of the sharing setting, it is possible to generate the process execution information of the sharing setting in a state in which the destination information of the individual attribute or the storage destination information of the individual attribute is included.

According to the image forming device as defined in claim 3, in a case in which the process execution information of the individual setting available only to the specific user is changed to the process execution information of the sharing setting available to the plurality of users, it is possible to prevent generation of the process execution information of the sharing setting including the destination information of the individual attribute or the storage destination information of the individual attribute.

According to the program as defined in claim 4, in a case in which the process execution information of the individual setting available only to the specific user is changed to the process execution information of the sharing setting available to the plurality of users, it is possible to prevent generation of the process execution information of the sharing setting including the destination information of the individual attribute or the storage destination information of the individual attribute.

### BRIEF DESCRIPTION OF DRAWINGS

Fig. 1 is a diagram illustrating a system configuration of an image forming system according to an embodiment of the present disclosure.
Fig. 2 is a block diagram illustrating a hardware configuration of an image forming device 10 according to an embodiment of the present disclosure.
Fig. 3 is a block diagram illustrating a functional configuration of the image forming device 10 according to an embodiment of the present disclosure.
Fig. 4 is a diagram illustrating an example of a job history information management table stored in a job history storage unit 37.
Fig. 5 is a diagram illustrating a display screen example of an operation panel 40 provided in an image forming device 10.
Fig. 6 is a diagram illustrating an example of a list display screen of job histories displayed in a case in which a user performs a touch operation on an icon for displaying a list of job histories;
Fig. 7 is a diagram illustrating an example of a list of operation menus displayed in a case in which the user operates an operation menu button 60 displayed in an individual job history.
Fig. 8 is a diagram illustrating a selection screen example 1 displayed in a case in which the user performs an operation of changing individual job history information to shared job history information in an operation screen example illustrated in Fig. 7 according to the present invention.
Fig. 9 is a diagram illustrating a selection screen example 2 displayed in a case in which the user performs an operation of changing individual job history information to shared job history information in the operation screen example illustrated in Fig. 7 which is not part of the present invention.
Fig. 10 is a diagram illustrating a selection screen example 3 displayed in a case in which the user performs an operation of changing individual job history information to shared job history information in the operation screen example illustrated in Fig. 7 which is not part of the present invention.
Fig. 11 is a diagram illustrating an example of a job history information management table after the user presses a "share" button on the selection screen as illustrated in Figs. 8 to 10 to generate shared job history information.
Fig. 12 is a diagram illustrating an example of a list screen of job histories when a user B logs in after new shared job history information is generated.
Fig. 13 is a diagram illustrating a state in which the user B operates an operation menu button 60 of new shared job history information and selects an operation item "execute" on the list screen of the job histories in Fig. 12.
Fig. 14 is a diagram illustrating an example of an operation screen displayed on the operation panel 40 in a case in which the user B selects the operation item "execute" on the operation screen of Fig. 13.
Fig. 15 is a diagram illustrating a mode in which an individual job history information which is original is duplicated and left as it is without being deleted in a case in which shared job history information not including an e-mail address of "xxx@aaa.com" which is destination information of an individual attribute is generated.
Fig. 16 is a flowchart illustrating an operation of the image forming device 10 according to an embodiment of the present disclosure.
Fig. 17 is a diagram illustrating a specific example when it is determined whether destination information included in a job history of individual setting is information of an individual attribute or information of a shared attribute.
Fig. 18 is a diagram illustrating a specific example when it is determined whether storage destination information included in a job history of individual setting is of an individual attribute or a shared attribute.

### DESCRIPTION OF EMBODIMENTS

Next, embodiments of the present disclosure will be described in detail with reference to the drawings.

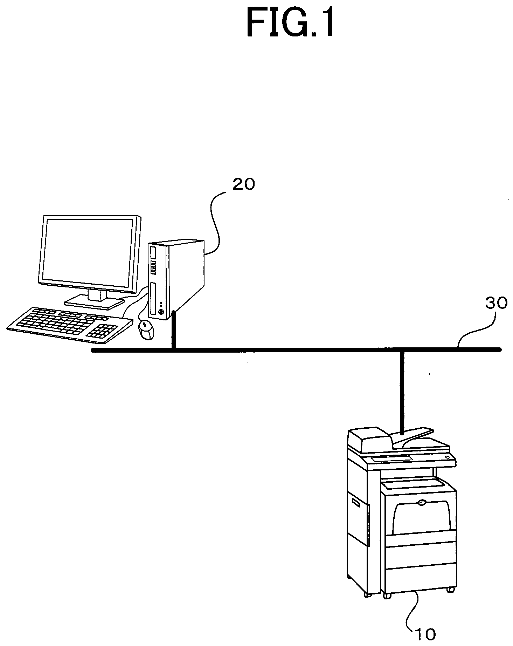

Fig. 1 is a diagram illustrating a system configuration of an image forming system according to an embodiment of the present disclosure.

As illustrated in Fig. 1, an image forming system according to an embodiment of the present disclosure includes an image forming device 10 and a terminal device 20 connected to each other via a network 30. The terminal device 20 generates print data and transmits the generated print data to the image forming device 10 via the network 30. The image forming device 10 receives print data transmitted from the terminal device 20 and outputs an image corresponding to the print data on a sheet. The image forming device 10 is a so-called multifunction peripheral that has a plurality of functions such as a printing function, a scanning function, a copying function, and a facsimile function.

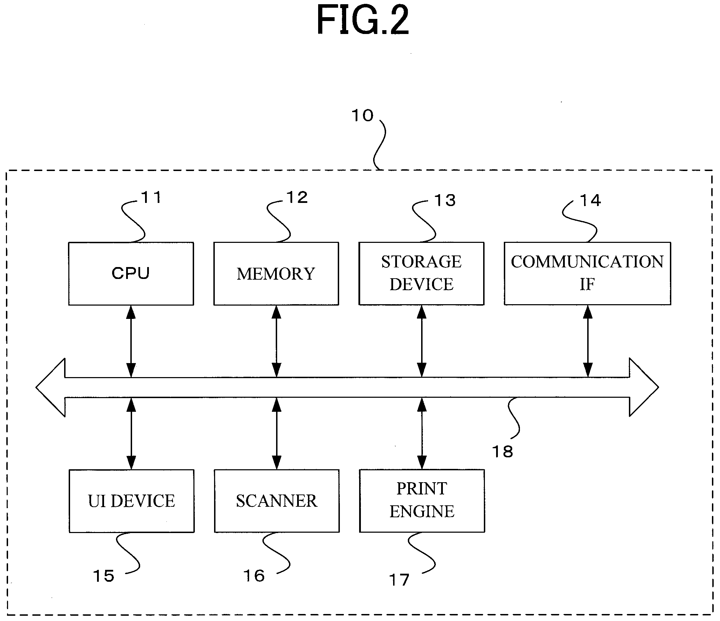

Next, a hardware configuration of the image forming device 10 in the image forming system of the present embodiment is illustrated in Fig. 2.

As illustrated in Fig. 2, the image forming device 10 includes a CPU 11, a memory 12, a storage device 13 such as a hard disk drive, a communication interface (abbreviated to IF) 14 that transmits and receives data to and from an external device or the like via the network 30, a user interface (abbreviated as UI) device 15 including a touch panel or a liquid crystal display and a keyboard, a scanner 16, and a print engine 17. These constituents are connected to each other via a control bus 18.

The print engine 17 prints an image on a recording medium such as printing paper through processes such as charging, exposure, development, transferring, and fixing.

The CPU 11 is a processor that executes a predetermined process based on a control program stored in the memory 12 or the storage device 13 to control an operation of the image forming device 10. In the present embodiment, the CPU 11 will be described as reading and executing the control program stored in the memory 12 or the storage device 13, but the program may be stored in a storage medium such as a CD-ROM and provided to the CPU 11.

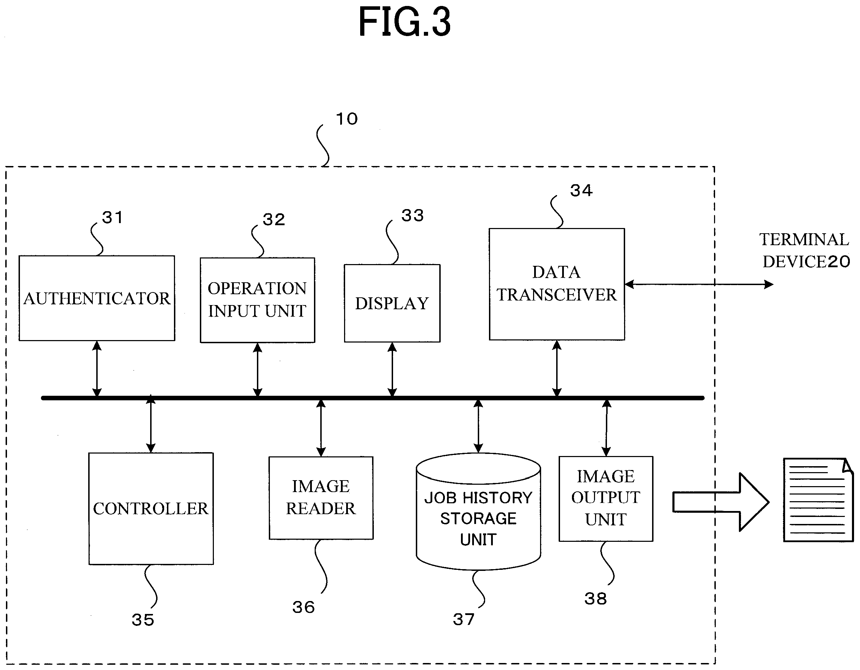

Fig. 3 is a block diagram illustrating a functional configuration of the image forming device 10 implemented by executing the control program.

As illustrated in Fig. 3, the image forming device 10 of the present embodiment includes an authenticator 31, an operation input unit 32, a display unit 33, a data transceiver unit 34, a controller 35, an image reader 36, a job history storage unit 37, and an image output unit 38.

The authenticating portion 31 executes an authentication process on a user who intends to use the image forming device 10. The display unit 33 is controlled by the controller 35 and displays various types of information for the user. The operation input unit 32 inputs various types of operation information performed by the user.

The data transceiver unit 34 transmits and receives data to and from an external device such as the terminal device 20.

The controller 35 controls all operations of the image forming device 10, generates print data based on the print job received from the terminal device 20 via the data transceiver unit 34, performs control such that the generated print data is output from the image output unit 38, and performs control such that a document image is read by the image reader 36, and the like. The job history storage unit 37 stores job history information indicating an execution history of various jobs such as a print job, a scan job, a copy job, and a facsimile transmission job executed by the controller 35. Here, the job history information is history information of process content of jobs executed in the past.

The image output unit 38 outputs an image on a recording medium such as printing paper under the control of the controller 35. The image reader 36 reads a document image from a set document under the control of the controller 35.

Here, the job history storage unit 37 stores individual job history information which is setting content of a job when each user performs the job, and a job history information management table for managing shared job history information in a state in which the individual job history information is available to a plurality of users.

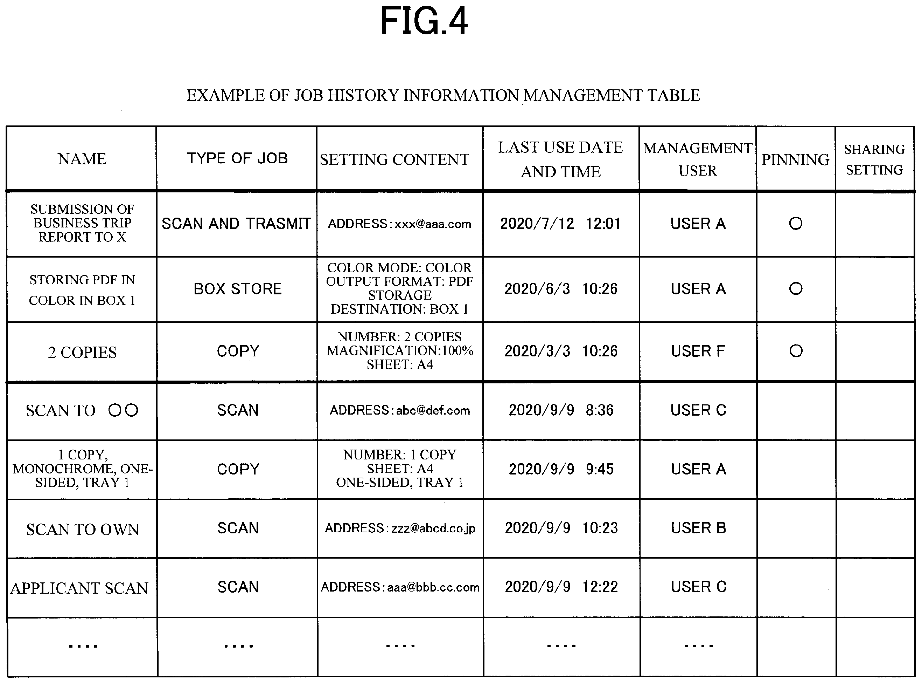

An example of the job history information management table stored in the job history storage unit 37 is illustrated in Fig. 4.

Referring to Fig. 4, in the job history information management table, manages information such as the name of each job performed previously, a type of job, setting content, a last use date and time, a management user, presence or absence of pinning, and presence or absence of a sharing setting are managed.

In a case in which each user is authenticated in the authenticator 31 and logs in when the user uses the image forming device 10, each user can refer to a list of individual job histories in which the user is a management user and a list of shared job histories is set to be shared. In a case in which the user desires to perform a job having the same content as a job performed in the past, the user can select an individual job history or a shared job history and perform a new job.

Here, the management user is a user who is a possessor or an owner of the job history information, and is a user who has authority to delete and edit the job history information.

Here, a new job history is generated whenever a job is executed. However, a data storage area is limited, and the data storage area is likely to be insufficient if all the job histories are stored. Therefore, for example, an upper limit is set such that only the latest 200 jobs remain in the job history, and the job history exceeding the upper limit is designed to be deleted from the job history of which an execution date and time is older.

Accordingly, it is possible to perform a pinning setting so that a job history that is not desired to be deleted is not to be deleted. For the job history set to be pinned, even when a job executed later exceeds the upper limit number, a process of leaving the job history without being deleted is performed.

For example, referring to the job history information management table in Fig. 4, it can be understood that a job history named "submission of business trip report to Mr. or Ms. X" is pinned. That is, the pinned job history is left regardless of the number of jobs executed later.

Such a job history may be desired to be shared and used not only by the management user but also by a plurality of users. Therefore, the individual job history can be changed to the shared job history by setting the individual job history to the sharing setting. The job history set to be shared is available to all logged-in users.

Then, when an instruction to change the individual job history information available only to a specific user from among such job history information to the shared job history information is received, in a case in which the individual job history information includes destination information of the individual attribute or storage destination information of the individual attribute, the controller 35 displays setting content of the individual job history information on the display 33 in a state in which the destination information or the storage destination information is not selected or not selectable.

Specifically, the controller 35 displays the setting content of the shared job history information in a state in which the destination information of the individual attribute or the storage destination information of the individual attribute is not selected by displaying the destination information of the individual attribute or the storage destination information of the individual attribute in an unselected state on the operation screen during selection of information to be included in the shared job history information.

However, in a case in which the user performs an operation of selecting the destination information of the individual attribute or the storage destination information of the individual attribute on the operation screen during selection of the information to be included in the shared job history information, the controller 35 generates the shared job history information including the destination information or the storage destination information.

Here, the destination information is, for example, various types of transmission destination information used when electronic data such as an electronic mail address and a facsimile number is transmitted. The storage destination information is, for example, various types of information used when electronic data is stored, such as a name or a confidential box number of a storage destination folder for storing electronic data, an IP address of a server at a storage destination, a terminal device name, and the like.

The controller 35 displaying the setting content of the shared job history information in a state in which the destination information or the storage destination information not selectable by not displaying the destination information of the individual attribute or the storage destination information of the individual attribute on the operation screen during selection of the information to be included in the shared job history information.

When the destination information of the individual attribute or the storage destination information of the individual attribute is displayed on the operation screen during selection of the information to be included in the shared job history information, the controller 35 may display the setting content of the shared job history information in a state in which the destination information or the storage destination information is not selectable by not receiving the selection of the displayed destination information or storage destination information, which is not part of the present invention.

In a case in which the shared job history information is generated without including the destination information or the storage destination information of the individual attribute included in the individual job history information, the job cannot be performed using the destination information or the storage destination information of the individual attribute included in the individual job history information. Therefore, when the shared job history information that does not include the destination information of the individual attribute or the storage destination information of the individual attribute is generated, the controller 35 may leave original individual job history information as it is without deleting the original individual job history information.

When the destination information included in the individual job history information is included in an individual destination list such as an individual address book, the controller 35 determines that the destination information is the destination information of the individual attribute.

In a case in which access to a storage destination identified by the storage destination information included in the individual job history information is limited to the specific user, for example, in a case in which a password or the like is set, the controller 35 determines that the storage destination information is the storage destination information of the individual attribute.

In the present embodiment, the case where a new job is executed using a job history which is history information with process content of jobs executed in the past has been described, but the present disclosure is not limited to such a case. For example, the present disclosure can be similarly applied to a case where various types of processes are executed using process execution information for executing a preset process such as a job flow for sequentially executing a series of preset processes and a one-touch application for executing a process of a job with preset setting content.

Next, an operation of the image forming device 10 of the present embodiment will be described in detail with reference to the drawings.

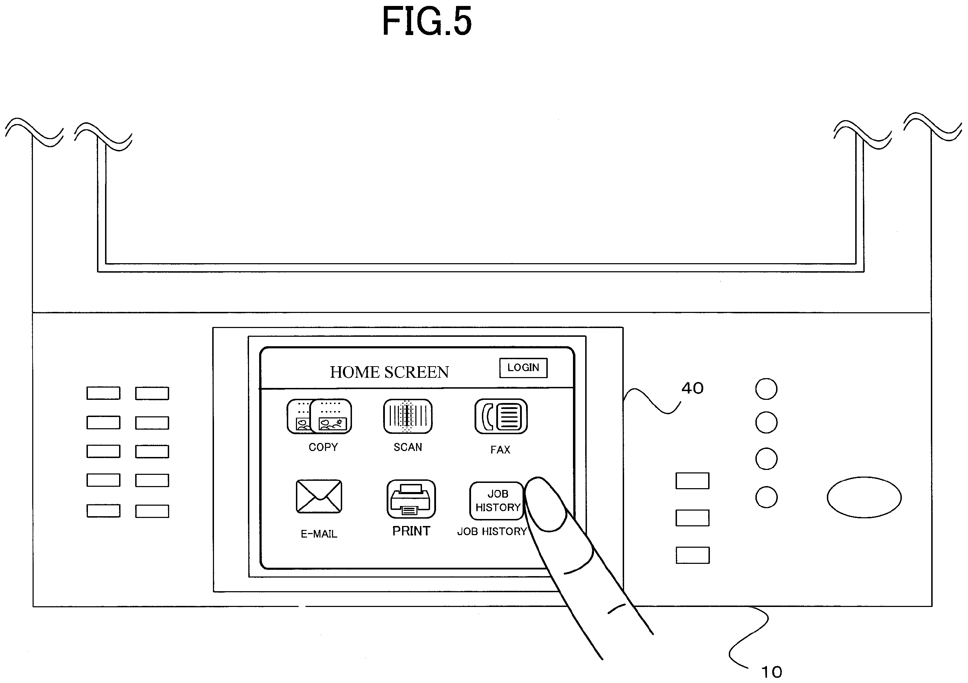

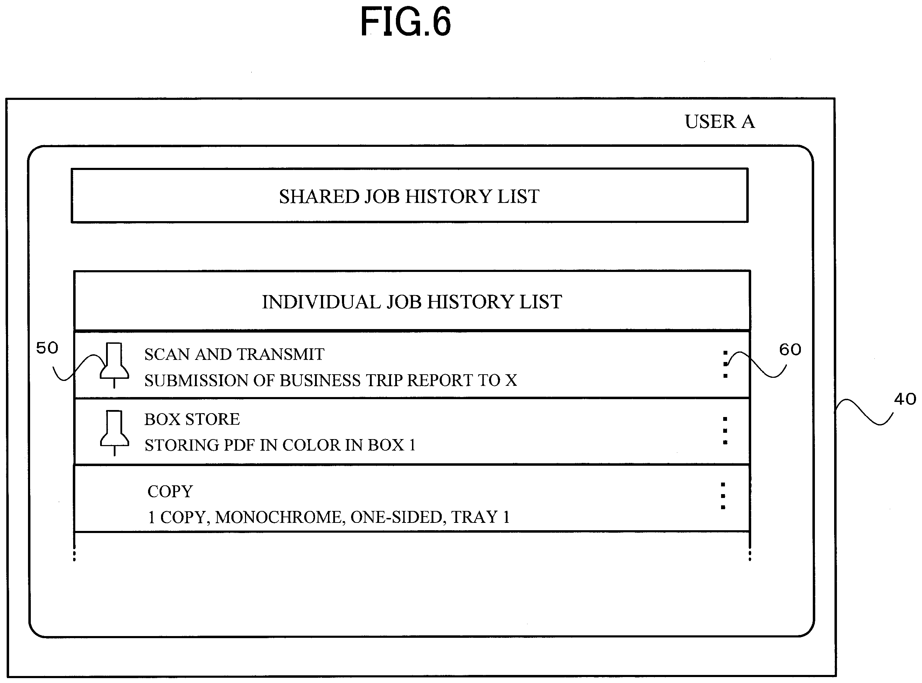

First, a display screen example of the operation panel 40 provided in the image forming device 10 is illustrated in Fig. 5. On the display screen example illustrated in Fig. 5, an icon for displaying a list of job histories is provided in the operation panel 40. An example of a job history list display screen displayed in a case in which the user performs a touch operation on this icon is illustrated in Fig. 6.

On the job history list display screen illustrated in Fig. 6, a list of shared job histories and a list of individual job histories are displayed separately. However, there is any one shared job history is not displayed on the display screen example illustrated in Fig. 6.

The list display screen of the job histories illustrated in Fig. 6 is an example of a display screen displayed when a user A logs in in a state in which the job history information management table illustrated in Fig. 4 is stored in the job history storage unit 37. However, due to a display space, some of the job histories displayed on the job history list display screen are omitted and are not displayed.

Here, on the list display screen illustrated in Fig. 6, both a shared job history in which the user herself or himself is a management user and a shared job history in which another user is a management user are displayed as a shared job history list. However, in Fig. 6, only the individual job history in which the user A which has logged in is the management user is displayed in the individual job history list. Then, an individual job history set to be pinned is displayed in higher priority than an unpinned individual job history, and it can be understood that the individual job history is displayed in a state in which the pinning mark 50 is attached.

When a user intends to execute a job having the same content as that of a job executed in the past, the user can execute a job having desired content without performing detailed setting merely by selecting a job history having the same content as that of the job to be executed from the job list displayed in this way.

For example, it is possible to transmit a facsimile to the same destination as usual without inputting destination information and various settings only by selecting an individual job history named "submission of a business trip report to Mr. or Ms. X".

Here, the shared job history displayed in the shared job history list and the individual job history in the pinned state displayed in the individual job list are not deleted through execution of another job. However, among the individual job histories displayed in the individual job list, the individual job histories are deleted in a descending order of execution dates and times in a case in which the number of unpinned individual job histories exceeds a storage upper limit number as a job is executed.

The operation menu button 60 is displayed in both the shared job history and the individual job history, and various operations on the shared job history and the individual job history can be executed.

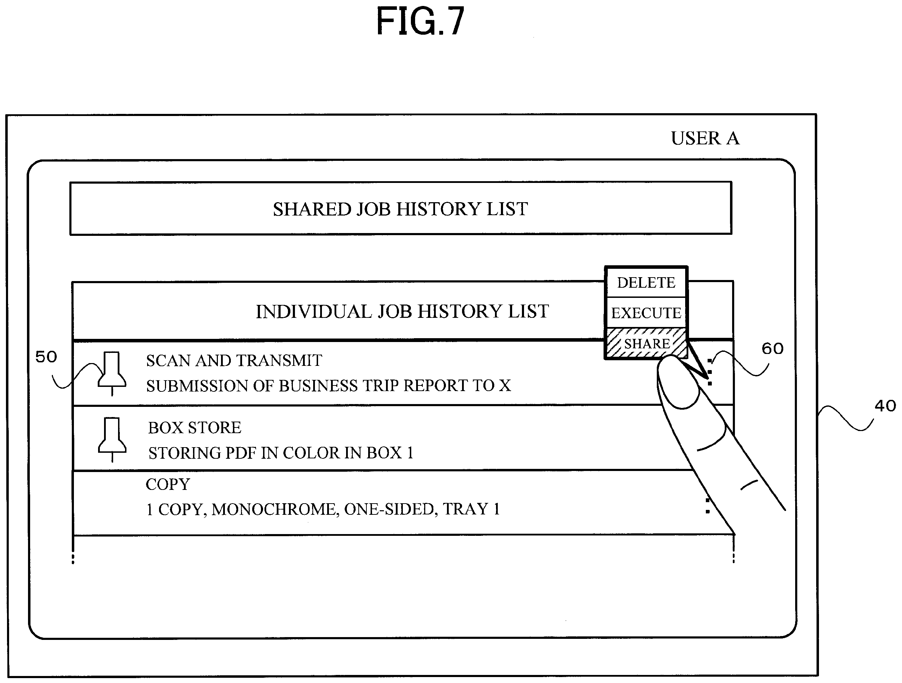

For example, an example of a list of operation menus displayed in a case in which the user operates the operation menu button 60 displayed in the individual job history is illustrated in Fig. 7.

Referring to Fig. 7, it can be understood that an operation menu including operation items of "Delete", "Execute", and "Share" is displayed. When the user selects the operation item "Share" in the operation menu, the individual job history is changed to the shared job history.

When the user selects the operation item "Delete" in the operation menu as illustrated in Fig. 7, the individual job history is deleted. When the user selects the operation item "Execute", a process using the individual job history is performed.

An operation in a case in which the user selects the operation item "Share" in the operation menu as illustrated in Fig. 7 will be described in detail below.

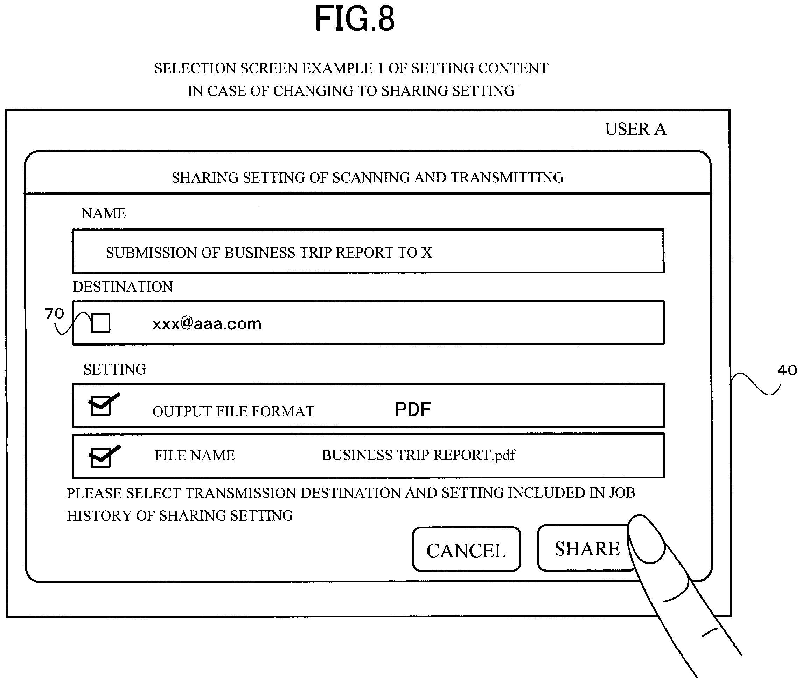

When the user performs an operation of changing the individual job history information to the shared job history information as illustrated in the operation screen example illustrated in Fig. 7, the controller 35 first displays a selection screen with setting content as illustrated in Fig. 8 on the display 33.

A selection screen example 1 illustrated in Fig. 8 and according to the present invention is a screen for selecting the setting content included in the job history information of the sharing setting and is displayed in a state in which the setting content of an "output file format" and a "file name" set in the job history information of the original individual setting is selected as it is, whereas an e-mail address of "xxx@aaa.com" which is the destination information is displayed in an unselected state. In the following description, it is assumed that the e-mail address "xxx@aaa.com" is destination information of an individual attribute and is destination information that should not be disclosed to other users other than the user A.

Here, the unselected state specifically means a state in which the check box 70 arranged next to the e-mail address of "xxx@aaa.com" is not checked. That is, in the selection screen when the user intends to change to the sharing setting, a state in which the e-mail address of "xxx@aaa.com" is not selected is an initial setting.

When the user presses the "Share" button in such a state, the shared job history information is generated in a state in which the e-mail address "xxx@aaa.com" is not set as the transmission destination.

In the selection screen example 1 illustrated in Fig. 8, the user intentionally selects and checks the check box 70 to set the e-mail address "xxx@aaa.com" as the transmission destination.

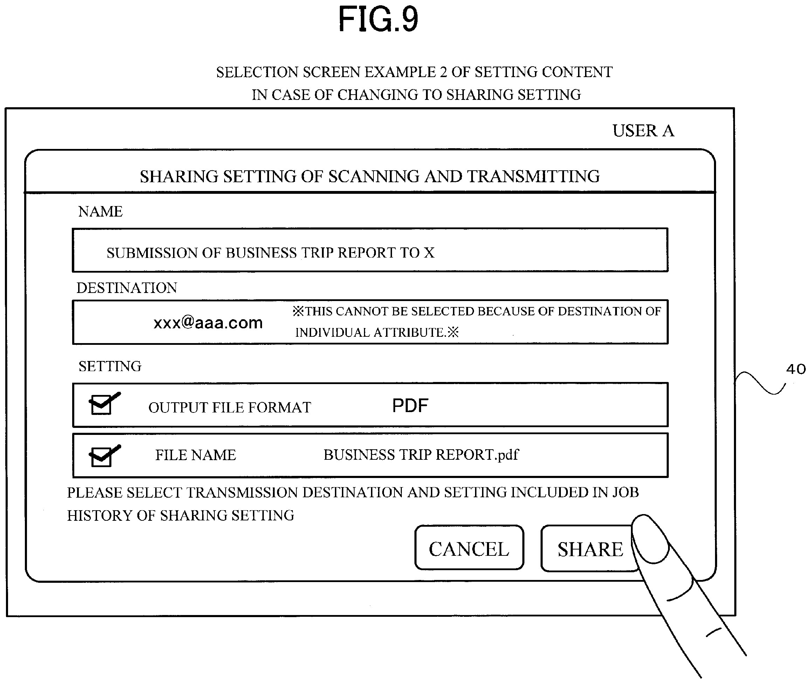

Fig. 9 illustrates another selection screen example 2 displayed in a case in which the user performs an operation of changing the individual job history information to the shared job history information in the operation screen example illustrated in Fig. 7.

In the selection screen example 2 illustrated in Fig. 9, which is not part of the present invention, it can be understood that the e-mail address "xxx@aaa.com" included in the individual job history information is displayed as a transmission destination, but is displayed in an unselectable state. Here, the unselectable state means a state in which an address cannot be selected even if the user intentionally intends to select the select. Specifically, in the selection screen example 2 illustrated in Fig. 9, there is no check box 70 as illustrated in the selection screen example 1 in Fig. 8. Therefore, the user cannot generate the shared job history information by including the e-mail address "xxx@aaa.com" in the transmission destination. In Fig. 9, a caution such as "This cannot be selected because of destination of individual attribute." is displayed in a setting field of the transmission destination so that the user can understand the reason why an e-mail address such as "xxx@aaa.com" cannot be set as the transmission destination.

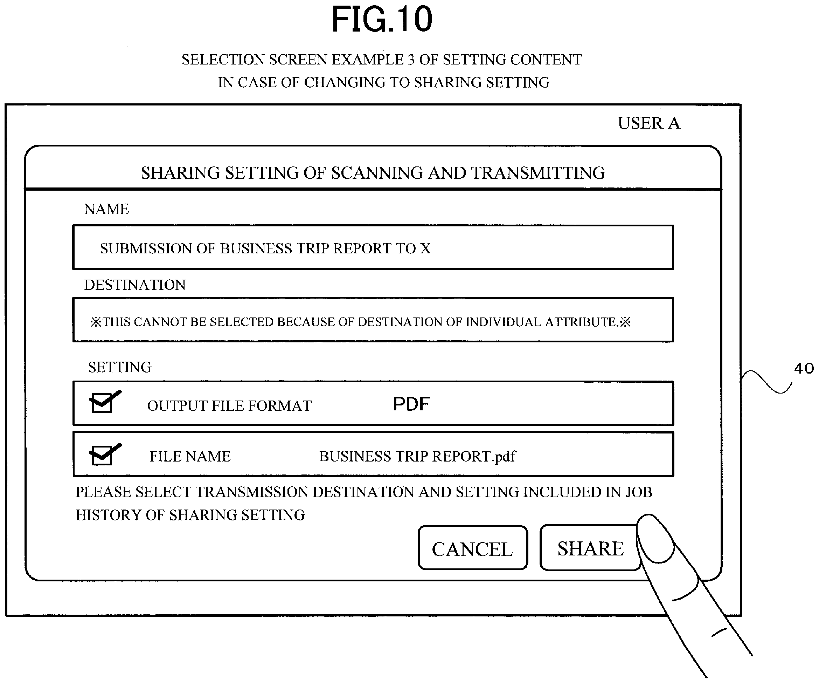

Fig. 10 illustrates still another selection screen example 3 displayed in a case in which the user performs an operation of changing the individual job history information to the shared job history information in the operation screen example illustrated in Fig. 7.

In the selection screen example 3 illustrated in Fig. 10, which is not part of the present invention, it can be understood that the e-mail address "xxx@aaa.com" included in the individual job history information is not displayed as the original transmission destination. Therefore, the user cannot generate the shared job history information by including the e-mail address "xxx@aaa.com" in the transmission destination. In Fig. 10, a caution such as "This cannot be selected because of destination of individual attribute." is also displayed in the setting field of the transmission destination so that the user can understand the reason why the e-mail address set in the individual job history information cannot be set as the transmission destination.

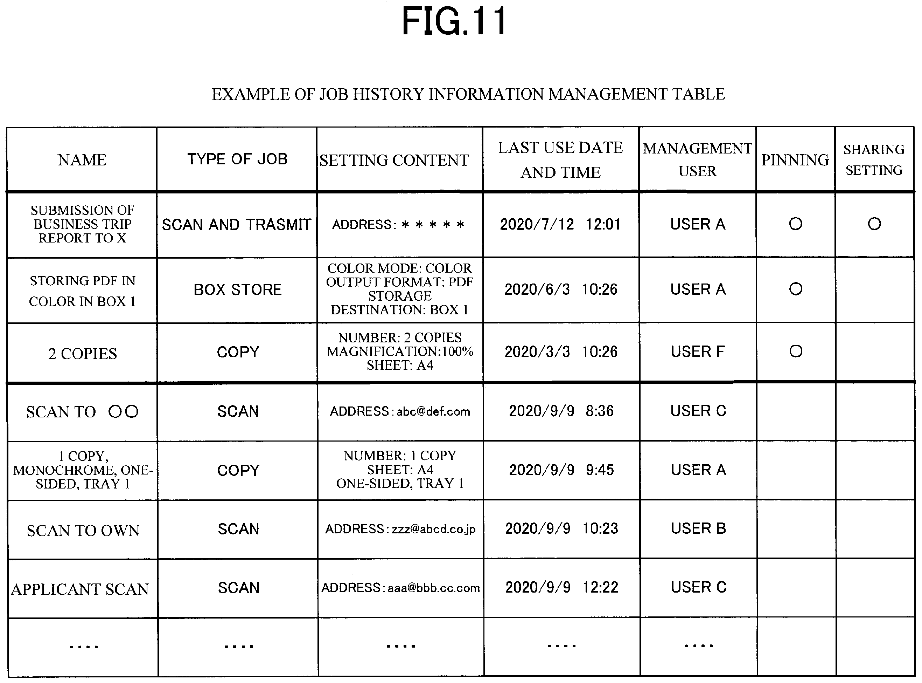

Next, Fig. 11 illustrates an example of the job history information management table after the user presses the "Share" button on the selection screens as illustrated in Figs. 8 to 10 to generate the shared job history information.

Referring to Fig. 11, it can be understood that the job history information having the name of "Submission of a business trip report to Mr. or Ms. X" is changed to the shared job history information by the sharing setting. Here, a transmission destination of the generated shared job history information is not set, and it is necessary for a user who intends to execute a job using the shared job history information to input a transmission destination.

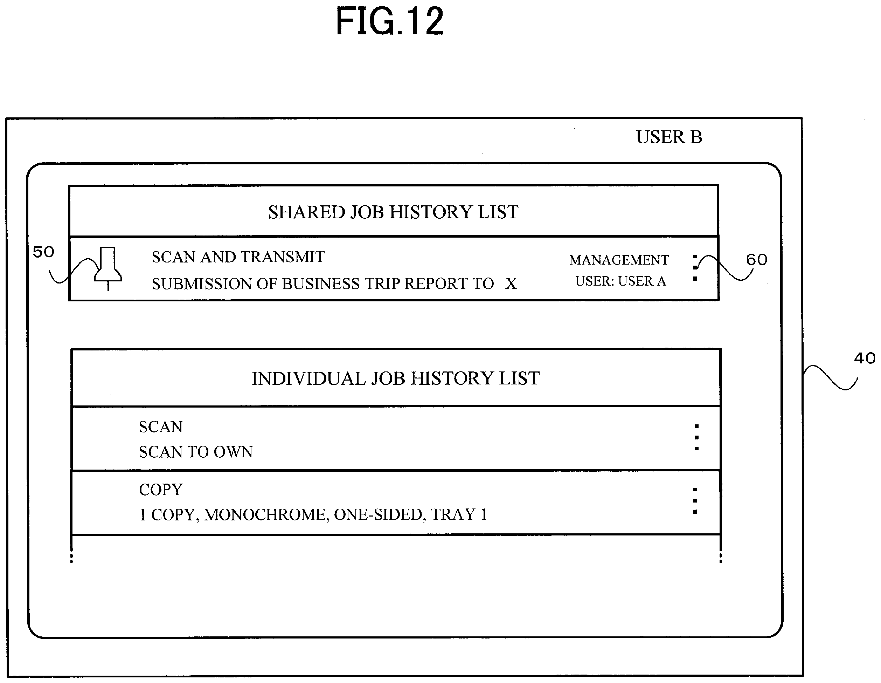

Fig. 12 illustrates an example of a list screen of job histories when a user B logs in after the new shared job history information is generated in this way. Referring to Fig. 12, it can be understood that the generated new shared job history information is displayed in a pinned state in the shared job history list.

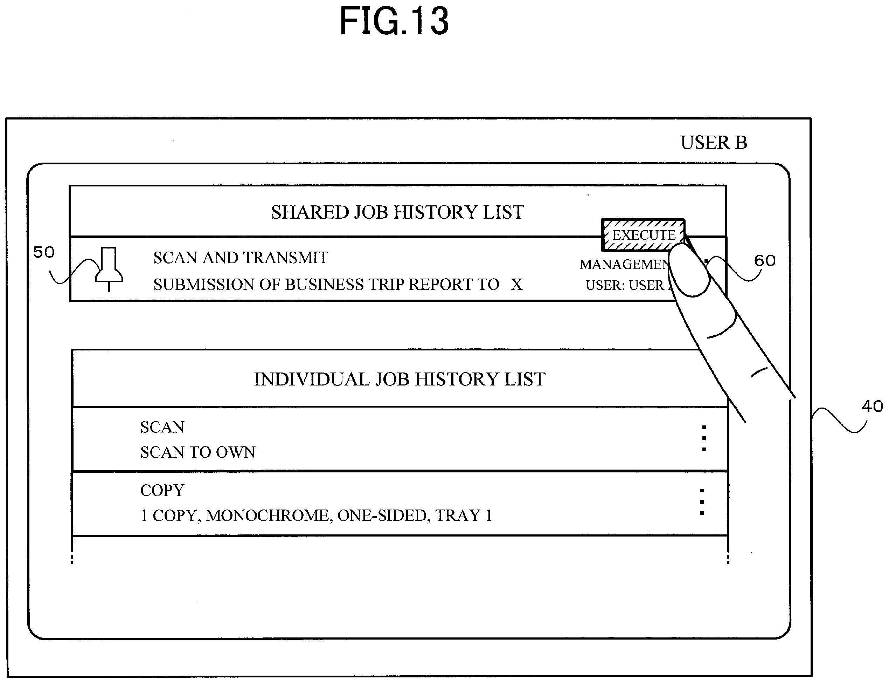

Next, Fig. 13 illustrates a state in which the user B selects the operation item "Execute" by operating the operation menu button 60 of new shared job history information on the job history list screen of Fig. 12.

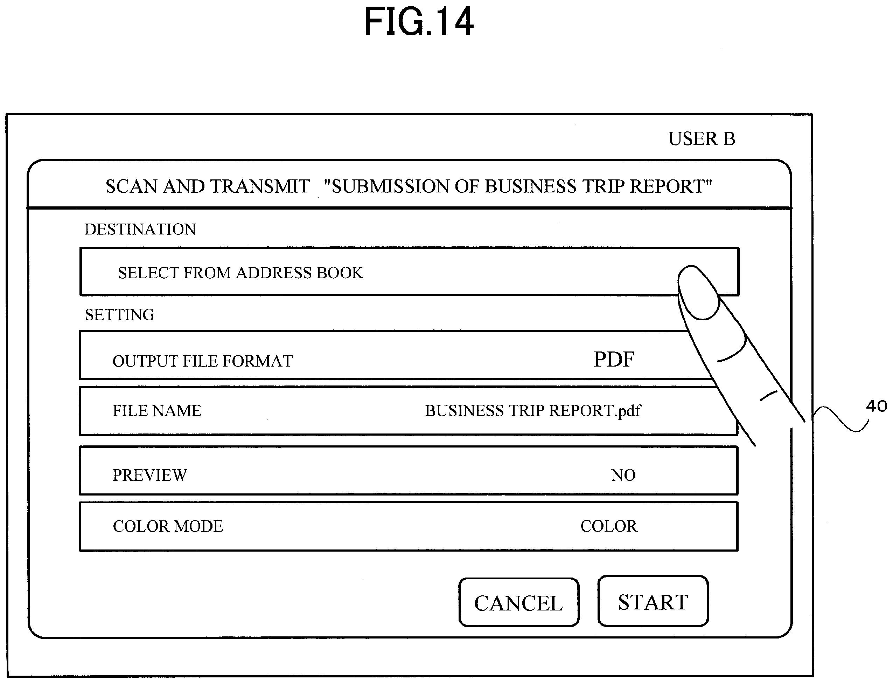

When the user B selects the operation item "Execute", an operation screen as illustrated in Fig. 14 is displayed on the operation panel 40. In the operation screen illustrated in Fig. 14, setting content when a shared job history named "Submission of business trip report" is executed is displayed. However, the transmission destination in the setting content is not set in advance, and the user B has to input the transmission destination by herself or himself. Fig. 14 illustrates a state in which the user B intends to select a destination from the address book. Then, when the user B selects a transmission destination from the address book and then presses a "Start" button, a job in which the shared job history information is used is executed.

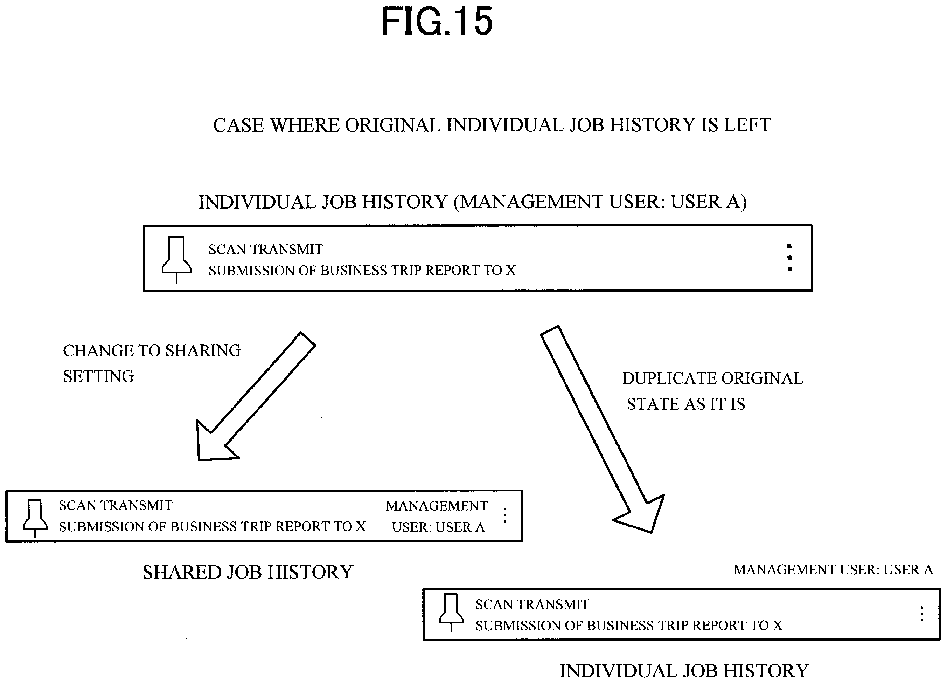

In a case in which the shared job history information is generated by the above-described method, the e-mail address "xxx@aaa.com" included in the original individual job history information is deleted, and thus the job cannot be executed using this e-mail address. Therefore, as illustrated in Fig. 15, when the shared job history information that does not include the e-mail address "xxx@aaa.com" which is the destination information of the individual attribute is generated, the controller 35 may duplicate and leave the original individual job history information as it is without deleting the original individual job history information.

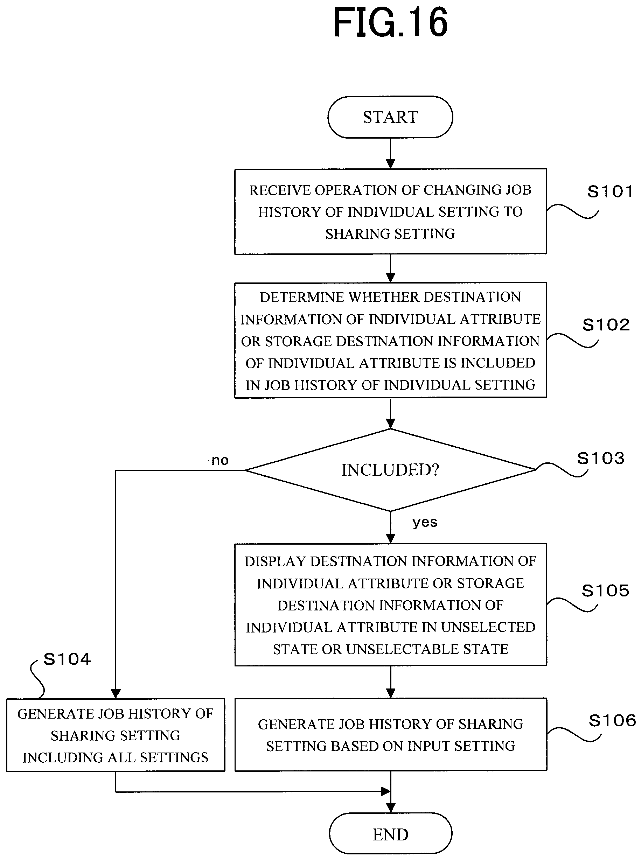

Next, the operation of the image forming device 10 in the present embodiment will be described with reference to a flowchart of Fig. 16.

First, in step S101, the controller 35 receives an operation of changing the job history of the individual setting to the sharing setting via the operation input unit 32.

Then, in step S102, the controller 35 determines whether the destination information of the individual attribute or the storage destination information of the individual attribute is included in the job history of the individual setting to be changed to the sharing setting. A specific example of this determination method will be described later.

Then, in a case in which it is determined in step S103 that the destination information of the individual attribute or the storage destination information of the individual attribute is not included in the job history of the individual setting to be changed to the sharing setting, the controller 35 generates a job history of the sharing setting including all the setting content in the job history of the individual setting in step S104.

Conversely, in a case in which it is determined in step S103 that the destination information of the individual attribute or the storage destination information of the individual attribute is included in the job history of the individual setting to be changed to the sharing setting, in step S105, the controller 35 displays the destination information of the individual attribute or the storage destination information of the individual attribute in an unselected state or in an unselectable state on the operation screen during selection of the setting content in the job history of the individual setting as the setting content of the sharing setting.

Finally, in step S106, the controller 35 generates a job history of the sharing setting based on the setting content input or selected by the user.

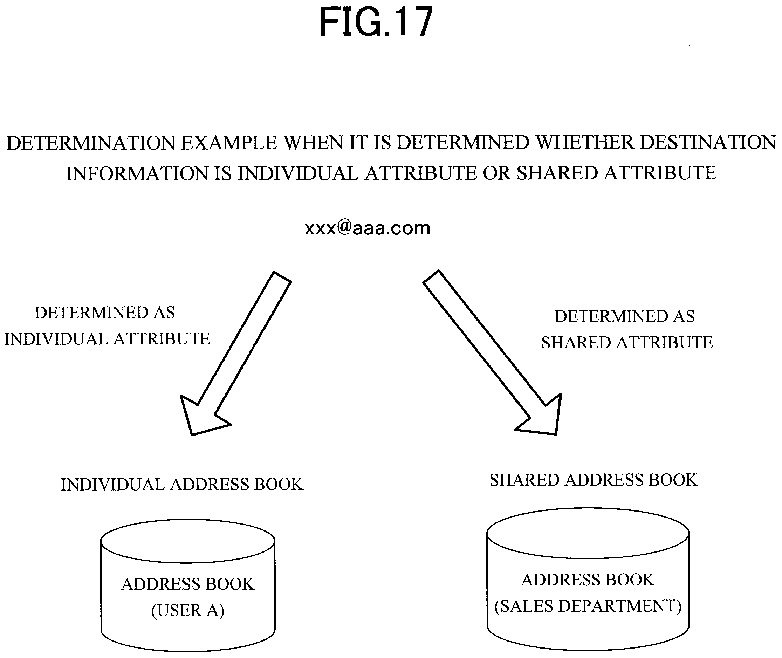

Next, a specific example when the controller 35 determines whether the destination information included in the job history of the individual setting is the individual attribute or the shared attribute will be described with reference to Fig. 17.

For example, in a case in which an e-mail address "xxx@aaa.com" is included in an individual address book, for example, an address book used by the user A on an individual basis, the controller 35 determines that the e-mail address "xxx@aaa.com" is destination information of the individual attribute.

Conversely, in a case in which the electronic mail address "xxx@aaa.com" is included in a shared address book commonly used by a plurality of users, for example, a shared address book of a sales department, the controller 35 determines that the electronic mail address "xxx@aaa.com" is destination information of the shared attribute.

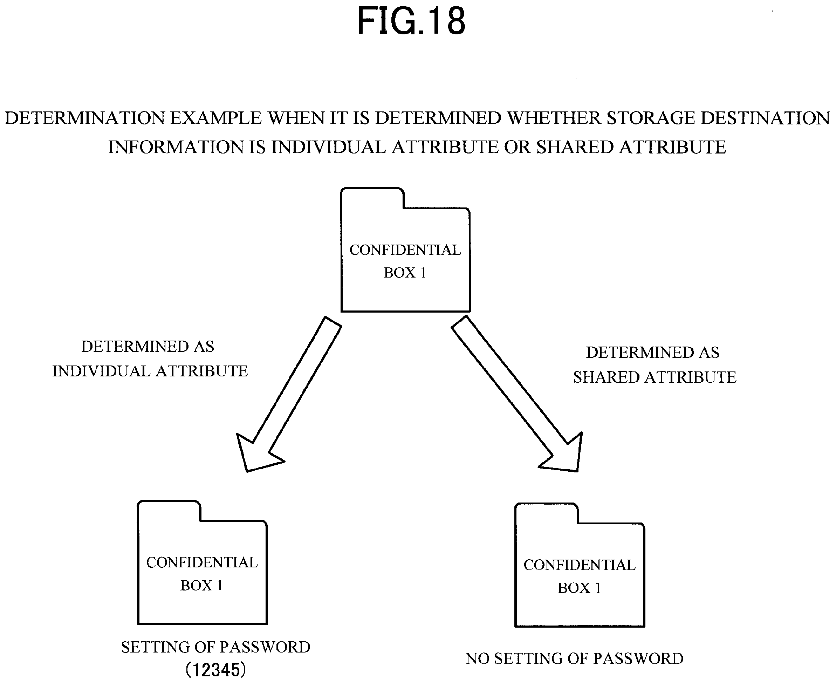

Next, a specific example when the controller 35 determines whether the storage destination information included in the job history of the individual setting is the individual attribute or the shared attribute will be described with reference to Fig. 18.

For example, in a case in which a password "12345" is set in a storage destination of "confidential box 1", and only a specific user can refer to this "confidential box 1", the controller 35 determines that "confidential box 1" is the storage destination information of the individual attribute.

Conversely, in a case in which a password is set in the storage destination of "confidential box 1" and any user can refer to the confidential box 1, the controller 35 determines that "confidential box 1" is the storage destination information of the shared attribute.

In each of the above-described embodiments, a processor is a processor in a broad sense and includes a general-purpose processor (for example, a central processing unit (CPU) or the like) or a dedicated processor (for example, a graphics processing unit (GPU), an application specific integrated circuit (ASIC), a field programmable gate array (FPGA), a programmable logic device, and the like).

An operation of the processor in each of the above-described embodiments may be executed not only by one processor but also by a plurality of processors which are located at physically separated positions in cooperation. An order of each operation of the processor is not limited to the order described in each of the above embodiments, and may be changed if appropriate.

## Claims

1. An image forming device (10) comprising a controller (35),
wherein the controller (35) is configured to:
receive an instruction to change process execution information of individual settings available only to an authenticated specific user from among process execution information for executing a preset process to process execution information of a sharing setting available to a user other than said authenticated specific user;
determine whether an e-mail address, which is transmission destination information or a confidential box, which is storage destination information is included in a setting content of the preset process; and
display, in a case in which it is determined that the e-mail address or the confidential box is included in the setting content of the preset process, the setting content of the preset process set in the process execution information in a state in which the e-mail address or the confidential box is not selected or not selectable,
wherein the controller (35) is configured to display the setting content of the preset process set in the process execution information in a state in which the e-mail address or the confidential box is not selected by displaying the setting content of the process execution information in the state where the e-mail address or the confidential box is not selected on an operation screen during selection of information to be included in the process execution information of the sharing setting.

2. The image forming device (10) according to claim 1, wherein the controller (35) is configured to generate process execution information including the e-mail address or the confidential box in a case in which a user performs an operation of selecting the e-mail address or the confidential box on an operation screen during selection of information to be included in the process execution information of the sharing setting.

3. The image forming device (10) according to claim 1 or 2, wherein the process execution information is history information of process content performed previously, process execution information for sequentially executing a series of preset processes, or process execution information for executing a process with preset setting content.

4. A computer program comprising instructions which when executed by an image forming device (10) according to claim 1 cause said device to execute the steps of:
receiving an instruction to change process execution information of individual settings available only to an authenticated specific user from among process execution information for executing a preset process to process execution information of a sharing setting available to a user other than said authenticated specific user;
determining whether an e-mail address, which is transmission destination information, or a confidential box, which is storage destination information, is included in a setting content of the preset process; and
displaying, in a case in which it is determined that the e-mail address or the confidential box is included in the setting content of the preset process, the setting content of the preset process set in the process execution information in a state in which the e-mail address or the confidential box is not selected or not selectable,
wherein the computer program causes the device to execute displaying the setting content of the preset process set in the process execution information in a state in which the e-mail address or the confidential box is not selected by displaying the setting content of the process execution information in the state where the e-mail address or the confidential box is not selected on an operation screen during selection of information to be included in the process execution information of the sharing setting.

## Patentansprüche

1. Bildgebungsvorrichtung (10) umfassend eine Steuereinheit (35),
wobei die Steuereinheit (35) konfiguriert ist,
eine Anweisung zum Ändern von Prozessausführungsinformationen einzelner Einstellungen, die nur einem authentifizierten bestimmten Benutzer zur Verfügung stehen, aus Prozessausführungsinformationen zum Ausführen eines voreingestellten Prozesses, zu empfangen, um Prozessausführungsinformationen einer Freigabeeinstellung, die einem anderen Benutzer als dem authentifizierten bestimmten Benutzer zur Verfügung stehen, zu verarbeiten;
festzustellen, ob eine E-Mail-Adresse, die eine Übertragungszielinformation ist, oder eine vertrauliche Box, die eine Speicherzielinformation ist, in einem Einstellungsinhalt des zu voreingestellten Prozesses enthalten ist; und
in einem Fall, in dem festgestellt wird, dass die E-Mail-Adresse oder die vertrauliche Box in dem Einstellungsinhalt des voreingestellten Prozesses enthalten ist, den Einstellungsinhalt des in den Prozessausführungsinformationen festgelegten voreingestellten Prozesses, in einem Zustand anzuzeigen, in dem die E-Mail-Adresse oder die vertrauliche Box nicht ausgewählt oder nicht auswählbar ist,
wobei die Steuereinheit (35) konfiguriert ist, den Einstellungsinhalt des in den Prozessausführungsinformationen festgelegten voreingestellten Prozesses in einem Zustand anzuzeigen, in dem die E-Mail-Adresse oder die vertrauliche Box nicht ausgewählt ist, indem sie den Einstellungsinhalt der Prozessausführungsinformationen in dem Zustand anzeigt, in dem die E-Mail-Adresse oder die vertrauliche Box auf einem Bedienbildschirm während der Auswahl von Informationen, die in die Prozessausführungsinformationen der Freigabeeinstellung aufgenommen werden sollen, nicht ausgewählt ist.

2. Bildgebungsvorrichtung (10) gemäß Anspruch 1, wobei die Steuereinheit (35) konfiguriert ist, Prozessausführungsinformationen einschließlich der E-Mail-Adresse oder der vertraulichen Box in einem Fall zu erzeugen, in dem ein Benutzer während der Auswahl von Informationen, die in die Prozessausführungsinformationen der Freigabeeinstellung aufgenommen werden sollen, auf einem Bedienbildschirm den Vorgang der Auswahl der E-Mail-Adresse oder der vertraulichen Box durchführt.

3. Bildgebungsvorrichtung (10) gemäß Anspruch 1 oder 2, wobei die Prozessausführungsinformationen Verlaufsinformationen zu zuvor durchgeführten Prozessinhalten, Prozessausführungsinformationen zum sequenziellen Ausführen einer Reihe voreingestellter Prozesse oder Prozessausführungsinformationen zum Ausführen eines Prozesses mit voreingestelltem Einstellungsinhalt sind.

4. Computerprogramm umfassend Anweisungen, die, wenn sie von einer Bildgebungsvorrichtung (10) gemäß Anspruch 1 ausgeführt werden, die Vorrichtung veranlassen, die folgenden Schritte auszuführen:
Empfangen einer Anweisung zum Ändern von Prozessausführungsinformationen einzelner Einstellungen, die nur einem authentifizierten bestimmten Benutzer zur Verfügung stehen, aus Prozessausführungsinformationen zum Ausführen eines voreingestellten Prozesses, um Prozessausführungsinformationen einer Freigabeeinstellung, die einem anderen Benutzer als dem authentifizierten bestimmten Benutzer zur Verfügung stehen, zu verarbeiten;
Feststellen, ob eine E-Mail-Adresse, die eine Übertragungszielinformation ist, oder eine vertrauliche Box, die eine Speicherzielinformation ist, in einem Einstellungsinhalt des voreingestellten Prozesses enthalten ist; und
Anzeigen, in einem Fall, in dem festgestellt wird, dass die E-Mail-Adresse oder die vertrauliche Box in dem Einstellungsinhalt des voreingestellten Prozesses enthalten ist, des Einstellungsinhalts des in den Prozessausführungsinformationen festgelegten voreingestellten Prozesses, in einem Zustand, in dem die E-Mail-Adresse oder die vertrauliche Box nicht ausgewählt oder nicht auswählbar ist,
wobei das Computerprogramm die Vorrichtung veranlasst, das Anzeigen des Einstellungsinhalts des in den Prozessausführungsinformationen festgelegten voreingestellten Prozesses in einem Zustand auszuführen, in dem die E-Mail-Adresse oder die vertrauliche Box nicht ausgewählt ist, indem es den Einstellungsinhalt der Prozessausführungsinformationen in dem Zustand anzeigt, in dem die E-Mail-Adresse oder die vertrauliche Box auf einem Bedienbildschirm während der Auswahl von Informationen, die in die Prozessausführungsinformationen der Freigabeeinstellung aufgenommen werden sollen, nicht ausgewählt ist.

## Revendications

1. Dispositif de formation d'images (10) comprenant un dispositif de commande (35), dans lequel le dispositif de commande (35) est configuré pour :
recevoir une instruction visant à modifier des informations d'exécution de processus de paramétrages individuels disponibles uniquement à un utilisateur spécifique authentifié parmi des informations d'exécution de processus pour exécuter un processus prédéfini en informations d'exécution de processus d'un paramétrage de partage disponible à un utilisateur autre que ledit utilisateur spécifique authentifié ;
déterminer si une adresse électronique, qui est une information de destination de transmission, ou une boîte confidentielle, qui est une information de destination de stockage, est incluse dans un contenu de paramétrage du processus prédéfini ; et
afficher, dans le cas où il est déterminé que l'adresse électronique ou la boîte confidentielle est incluse dans le contenu de paramétrage du processus prédéfini, le contenu de paramétrage du processus prédéfini défini dans les informations d'exécution de processus dans un état dans lequel l'adresse électronique ou la boîte confidentielle n'est pas sélectionnée ou ne peut pas être sélectionnée,
dans lequel le dispositif de commande (35) est configuré pour afficher le contenu de paramétrage du processus prédéfini défini dans les informations d'exécution de processus dans un état dans lequel l'adresse e-mail ou la boîte confidentielle n'est pas sélectionnée en affichant le contenu de paramétrage des informations d'exécution de processus dans l'état où l'adresse e-mail ou la boîte confidentielle n'est pas sélectionnée sur un écran de commande pendant la sélection des informations à inclure dans les informations d'exécution de processus du paramétrage de partage.

2. Dispositif de formation d'images (10) selon la revendication 1, dans lequel le dispositif de commande (35) est configuré pour générer des informations d'exécution de processus incluant l'adresse e-mail ou la boîte confidentielle dans le cas où un utilisateur effectue une opération de sélection de l'adresse e-mail ou de la boîte confidentielle sur un écran de commande pendant la sélection des informations à inclure dans les informations d'exécution de processus du paramétrage de partage.

3. Dispositif de formation d'images (10) selon la revendication 1 ou 2, dans lequel les informations d'exécution de processus sont des informations historiques sur un contenu de processus exécuté précédemment, des informations d'exécution de processus pour exécuter séquentiellement une série de processus prédéfinis ou des informations d'exécution de processus pour exécuter un processus avec un contenu de paramétrage prédéfini.

4. Programme informatique comprenant des instructions qui, lorsqu'elles sont exécutées par un dispositif de formation d'images (10) selon la revendication 1, amènent ledit dispositif à exécuter les étapes consistant à :
recevoir une instruction visant à modifier des informations d'exécution de processus de paramétrages individuels disponibles uniquement à un utilisateur spécifique authentifié parmi des informations d'exécution de processus pour exécuter un processus prédéfini en informations d'exécution de processus d'un paramétrage de partage disponible à un utilisateur autre que ledit utilisateur spécifique authentifié ;
déterminer si une adresse électronique, qui est une information de destination de transmission, ou une boîte confidentielle, qui est une information de destination de stockage, est incluse dans un contenu de paramétrage du processus prédéfini ; et
afficher, dans le cas où il est déterminé que l'adresse électronique ou la boîte confidentielle est incluse dans le contenu de paramétrage du processus prédéfini, le contenu de paramétrage du processus prédéfini défini dans les informations d'exécution de processus dans un état dans lequel l'adresse électronique ou la boîte confidentielle n'est pas sélectionnée ou ne peut pas être sélectionnée,
dans lequel le programme informatique amène le dispositif à afficher le contenu de paramétrage du processus prédéfini défini dans les informations d'exécution de processus dans un état dans lequel l'adresse e-mail ou la boîte confidentielle n'est pas sélectionnée en affichant le contenu de paramétrage des informations d'exécution de processus dans l'état où l'adresse e-mail ou la boîte confidentielle n'est pas sélectionnée sur un écran de commande pendant la sélection des informations à inclure dans les informations d'exécution de processus du paramétrage de partage.
